# FASCICULE DE BREVET EUROPEEN

(11) **EP 1 070 303 B1**
(45) Date de publication et mention de la délivrance du brevet: **28.02.2007**
(21) Numéro de dépôt: 99913381.2
(22) Date de dépôt: 09.04.1999
(51) Int. Cl.: G07F 7/10

(54) **PROCEDE POUR MODIFIER DE MANIERE INDIVISIBLE UNE PLURALITE D'EMPLACEMENTS DE LA MEMOIRE NON VOLATILE D'UNE CARTE A MICROCIRCUIT, NOTAMMENT UNE CARTE SANS CONTACT**
VERFAHREN ZUM UNTEILBAREN VERÄNDERN EINER VIELZAHL VON NICHT FLÜCHTIGEN SPEICHERPLÄTZEN EINER CHIPKARTE, INSBESONDERE EINE KARTE OHNE KONTAKT
METHOD FOR INDIVISIBLY MODIFYING A PLURALITY OF SITES IN A MICROCIRCUIT CARD NON VOLATILE MEMORY, IN PARTICULAR A CONTACTLESS CARD

(30) Priorité: 09.04.1998 FR 9804453
(43) Date de publication de la demande: 24.01.2001
(73) Titulaire: Innovatron Electronique (Societe Anonyme), 75006 Paris (FR)
(72) Inventeur: DIDIER, Stéphane, F-75019 Paris (FR); GRIEU, François, 75001 Paris (FR)
(74) Mandataire: Dupuis-Latour, Dominique
(86) Numéro de dépôt international: PCT/FR1999/000837
(87) Numéro de publication internationale: WO 1999/053451

(56) Documents cités:
- EP-A- 0 700 023
- EP-A- 0 740 268
- WO-A-89/02140
- DE-A- 4 439 266
- FR-A- 2 689 662
- FR-A- 2 701 578
- FR-A- 2 757 661
- US-A- 4 877 945

## Description

L'invention concerne les cartes à microcircuit, et plus particulièrement les cartes à microprocesseur, qui réalisent elles-mêmes diverses modifications de leur mémoire non volatile.

Lors de l'exécution d'une transaction, la mémoire est généralement modifiée, une ou plusieurs fois, et il est bien entendu nécessaire de s'assurer alors que toutes les modifications ont bien été correctement effectuées avant de pouvoir exploiter les informations nouvellement inscrites, les informations nouvellement inscrites devant être ignorées ou effacées en cas d'erreur ou de défaut d'intégrité de l'inscription.

Le US-A-4 877 945 décrit ainsi la manière de détecter une anomalie survenue au cours d'une séquence d'écriture de plusieurs informations afin d'empêcher la poursuite de la transaction sur des bases erronées.

Il est par ailleurs souhaitable, en cas d'anomalie, de pouvoir revenir au *statu quo ante,* c'est-à-dire qu'une transaction ultérieure devra être à même d'opérer sur les valeurs des informations qui étaient inscrites dans la carte avant l'exécution de la transaction incorrecte.

Le US-A-4 877 945 précité n'offre pas cet avantage, car les anciennes valeurs des informations auront, pour certaines, été perdues pendant l'exécution de la transaction incorrecte, de sorte qu'il ne sera pas possible de restaurer ces informations à leur état antérieur, du moins à partir des seules informations contenues dans cette carte.

Le WO-A-89/02140, quant à lui, décrit une telle manière d'opérer, mais qui n'est applicable qu'au cas de la modification d'une information unique ou de plusieurs modifications d'informations indépendamment les unes de autres.

Dans de nombreux cas, il est cependant nécessaire de modifier au cours de la même transaction plusieurs informations, et elles seront considérées "mutuellement interdépendantes" si elles nécessitent d'être traitées ensemble pour la bonne exécution de l'ensemble des modifications de l'ensemble des informations.

Le risque de transaction imparfaite ou inachevée portant sur une pluralité d'informations interdépendantes est particulièrement élevé avec les cartes du type "sans contact", où les limites du volume dans lequel la carte peut fonctionner correctement autour du terminal ne sont pas perceptibles. Il existe dans ce cas un risque non négligeable de rupture inattendue de la communication entre carte et terminal, dû à la sortie de la carte du rayon d'action du terminal avant la fin du traitement, ou du fait d'une perturbation passagère, par exemple le passage d'une masse métallique à proximité.

Un exemple (bien entendu non limitatif) est l'utilisation d'une telle carte dans une transaction de télébillétique, c'est-à-dire pour l'accès à un réseau de transport public, la carte jouant le double rôle de titre de transport et de porte-monnaie électronique.

Pour pallier les difficultés précitées, et rendre "indivisibles" une pluralité d'écritures ou autres modifications de données interdépendantes, plusieurs solutions ont été proposées.

Dans l'exemple d'application indiqué plus haut, les systèmes connus commencent par débiter le porte-monnaie, puis inscrivent les droits de transport acquis par l'usager. Si l'usager retire sa carte entre les deux opérations, il est invité à présenter la carte à nouveau et l'écriture des droits de transport est reprise. En revanche, s'il part sans représenter sa carte, il aura été lésé. Il est bien évidemment impossible de procéder dans l'ordre inverse car l'usager aurait alors intérêt à retirer sa carte avant que le porte-monnaie ne soit débité.

Cette solution implique que le terminal soit spécialement configuré pour permettre, en cas d'interruption, l'activation d'un traitement d'exception gérant la reprise de la transaction (réinsertion de la carte sur demande du terminal). Outre la complexification du logiciel du terminal, cette solution n'est pas totalement satisfaisante dans la mesure où, comme on l'a indiqué, l'usager se trouve néanmoins lésé en cas de non-reprise de la transaction.

Une autre solution consiste à utiliser des informations croisées, en conservant dans le terminal des informations sur l'état du porte-monnaie de la carte, et réciproquement. Mais cette solution n'est pas non plus satisfaisante car, outre sa complexité, elle augmente le volume de données échangées entre carte et terminal et ralentit donc l'exécution de la transaction. Elle est en outre difficilement applicable à un nombre important d'écritures à rendre indivisibles (trois et plus).

L'un des buts de l'invention est de proposer un procédé permettant d'effectuer une pluralité de modifications de la mémoire de la carte de manière indivisible.

Un autre but de l'invention est de proposer un tel procédé qui puisse être entièrement géré par la carte. Ce procédé pourra donc être mis en oeuvre sans modification des terminaux et sans qu'il y ait lieu de prévoir des traitements d'exception par ces terminaux, en utilisant la syntaxe des ordres existants et donc avec une grande souplesse dans le choix des commandes.

Le procédé de l'invention est du type dans lequel la carte est couplée temporairement à un terminal pendant l'exécution d'une transaction comportant l'application par le terminal à la carte d'une pluralité de commandes de modifications comprenant chacune au moins une opération d'inscription, dans la mémoire de la carte, d'une information respective désignée par la commande, les différentes informations ainsi inscrites étant mutuellement interdépendantes.

L'invention est définie de la manière indiquée à la revendication 1.

Le principe de base de l'invention consiste ainsi à grouper la pluralité de modifications à réaliser de manière indivisible au sein d'une même étape a) et, après avoir exécuté ces modifications, à valider globalement ces modifications par la carte. Si la validation est effective, à la prochaine opération effectuée par la carte (au cours de la même transaction ou au cours d'une transaction ultérieure), son contenu accessible reflétera nécessairement les modifications opérées.

Inversement, toute interruption du fonctionnement de la carte intervenant au cours de l'étape a) annulera l'ensemble des modifications effectuées, et les données de la mémoire non volatile resteront dans leur état antérieur à l'étape a).

Dans un mode de réalisation particulier, en cas de confirmation à l'étape b), on inscrit dans la mémoire de la carte un témoin confirmatif de bonne exécution et, lorsque la carte reçoit ultérieurement une commande impliquant la lecture et/ou la modification de l'une au moins des informations inscrites à l'étape a) ou de la valeur y correspondant, la carte examine préalablement l'état du témoin et, si celui-ci n'a pas été inscrit, la carte ignore ou annule les inscriptions provisoires antérieurement opérées à l'étape a) et exécute la commande sur la base desdites valeurs antérieures correspondant aux informations. Lorsque la carte examine l'état du témoin, si celui-ci a été inscrit la carte peut alors exécuter des opérations de recopie des écritures provisoires opérées à l'étape a).

Très avantageusement, la carte est apte à fonctionner selon deux modes, à savoir un mode en session, dans lequel les inscriptions sont opérées par exécution des étapes a) et b), et un mode hors session, dans lequel l'opération des inscriptions n'est pas confirmée à l'ensemble des étapes a) et b).

L'ouverture de session peut être implicite, par exemple à la remise à zéro (reset) de la carte ou suite à une commande à double action d'exécution d'une opération prédéterminée et interprétée comme un ordre d'ouverture de session.

Par exemple, quand une inscription normalement certifiée n'est pas accompagnée d'un certificat, la carte ouvre automatiquement une session qui traite l'inscription dans cette session.

De la même façon, la fermeture de session peut être implicite, suite à une commande à double action d'exécution d'une opération prédéterminée et interprétée comme un ordre de fermeture de session.

Par exemple, une opération de débit du porte-monnaie ferme la session, ce qui de plus évite de devoir différer la communication du certificat résultant et permet de confondre les certificats de session avec ceux de transaction du porte-monnaie.

Très avantageusement, le procédé comprend une fonction d'authentification combinée à la fonction de finalisation de l'étape b), forçant l'infirmation à l'étape b) dans le cas où l'authentification échoue.

Dans une première mise en oeuvre, cette authentification est opérée par la carte qui authentifie le terminal et/ou les données échangées entre terminal et carte, la carte contrôlant un certificat cryptographique produit par le terminal et transmis à la carte et ne confirmant les modifications à l'étape b) que si ce certificat est reconnu correct.

Dans le cas d'un mode avec session, on peut prévoir que, lorsque la carte reçoit du terminal des commandes de modification du contenu de la mémoire incluant la vérification d'un certificat cryptographique, cette vérification est opérée si la commande est reçue hors session, et ne l'est pas si la commande est reçue en session.

En d'autres termes, celles des commandes exécutées par la carte b) à l'étape b) qui normalement (c'est-à-dire hors session) vérifieraient un certificat cryptographique, ne comprennent plus cette vérification quand elles sont exécutées dans le cadre d'une session, le "certificat de session authentifiant le terminal" réalisant une fonction équivalente.

Dans une seconde mise en oeuvre, l'authentification est opérée par le terminal qui authentifie la carte et/ou les données échangées entre terminal et carte, la carte produisant et transmettant au terminal un certificat cryptographique de manière conditionnelle, si et seulement si les modifications ont été confirmées à l'étape b).

Dans le cas d'un mode avec session, on peut prévoir que, lorsque la carte reçoit du terminal à l'étape b) des commandes de modification du contenu de la mémoire incluant la production d'un certificat cryptographique, cette production est opérée si la commande est reçue hors session, et ne l'est pas si la commande est reçue en session.

En d'autres termes, celles des commandes exécutées par la carte à l'étape b) qui normalement (c'est-à-dire hors session) produiraient un certificat cryptographique, ne comprennent plus cette production quand elles sont exécutées dans le cadre d'une session, le "certificat de session authentifiant le terminal" réalisant une fonction équivalente.

On peut par ailleurs prévoir que, lorsque la carte reçoit du terminal des commandes de modification du contenu de la mémoire incluant la production d'une pluralité de certificats cryptographiques, ces certificats sont mémorisés à cette étape b), puis transmis ensemble au terminal si et seulement si les modifications ont été confirmées à l'étape b).

En d'autres termes, on prévoit de différer la communication par la carte des certificats cryptographiques produits normalement par les ordres de l'étape b). En particulier, si une commande d'écriture certifiée produit un certain certificat d'écriture, il est souhaitable que celui-ci ne sorte de la carte qu'une fois l'écriture effectuée irrévocablement.

Dans une forme de mise en oeuvre particulière, au moins certaines des commandes comprennent un attribut d'inhibition et, si la carte exécute une telle commande, les modifications opérées par cette commande prennent effet indépendamment du résultat de l'étape b).

En d'autres termes, l'attribut définit si la commande est effectuée en session (c'est-à-dire sera annulée si la session n'est pas fermée) ou hors session (c'est-à-dire effective immédiatement, comme si elle était effectuée hors session, même si elle est chronologiquement en session).

Très avantageusement, le procédé prévoit en outre, après l'étape b) et en cas de confirmation des modifications, la séquence d'étapes suivante : d) exécution par le terminal d'une action suite à la confirmation par la carte ; e) en cas de bonne exécution de ladite action par le terminal, inscription dans la carte d'une information de ratification ultérieurement accessible en lecture.

Une telle "ratification" de la session indique à la carte que le terminal a effectivement pu prendre les décisions (par exemple l'ouverture d'un portillon dans le cas d'une application d'accès à un réseau de transport en commun) suite à l'exécution de la session.

On notera que cette ratification est gérée par la carte sans nécessité d'une écriture supplémentaire (la recopie des écritures provisoires étant une opération qui, de toute façon, doit être tôt ou tard effectuée). En outre cette recopie n'est opérée côté carte qu'à condition que l'action est bien exécutée côté terminal, c'est-à-dire uniquement en cas de cohérence de l'ensemble de la transaction.

L'ensemble des opérations étant gérée par la carte, on peut avantageusement prévoir que la commande d'inscription de l'étape e) est une commande implicite, toute commande reçue par la carte après l'étape b) étant interprétée comme un ordre d'inscription dans la carte d'une information de ratification.

D'autres caractéristiques et avantages ressortiront de la description ci-dessous de deux exemples de mise en oeuvre de l'invention.

Dans ces exemples, comme d'ailleurs dans le reste du texte, le mot "désigner", ici entendu au sens de "déterminer un parmi plusieurs", vise l'action consistant à caractériser une information particulière parmi les différentes informations contenues dans la carte.

La commande peut viser par elle-même une information particulière ; par exemple, la commande "débiter le porte-monnaie d'un montant x" désigne l'emplacement mémoire contenant la valeur de l'information "solde du porte-monnaie".

Cette désignation peut être explicite, comme par exemple dans l'exemple I ci-dessous, où il est prévu des commandes d'écriture avec une adresse ou un identifiant de secteur, indexés par un indice i.

### Exemple I

On se propose de réaliser une carte stockant 100 valeurs de huit octets chacune, et supportant les ordres :
- Lecture d'une valeur v de 8 octets, désignée par son indice i de 1 à 100.
- Écriture d'une valeur v de 8 octets, désignée par son indice i de 1 à 100.
- Ouverture de session.
- Fermeture de session.

La carte doit permettre jusqu'à trois écritures dans une même session. Par convention, on utilisera des lettres majuscules pour désigner les valeurs en mémoire non volatile (EEPROM par exemple) et des lettres minuscules pour désigner les valeurs en mémoire volatile (RAM, dont le contenu est perdu à la mise hors tension).

Une zone de mémoire non volatile est affectée au stockage principal des données de la carte (écritures définitives) :
- V[i], i de 1 à 100 : 100 x 8 octets

Une autre zone de mémoire non volatile est affectée au mécanisme de session, et comprend :
- T[k], k de 1 à 3 : 3 x 8 octets contenant les valeurs écrites pendant la session (écritures provisoires).
- I[k], k de 1 à 3 : 3 x 1 octet contenant les indices des valeurs écrites pendant la session.
- C : 1 octet de comptage qui sera écrit en fin de session.

C code le nombre d'écritures effectuées dans la session ; un mécanisme de redondance approprié (associant par exemple le complément de cette valeur) permet d'assurer que l'on sait détecter le cas où la valeur stockée dans cet octet de comptage est incertaine.

Le déroulement des opérations est le suivant.
Étape 0 : à un moment compris entre la mise sous tension de la carte et la première commande réalisée, C est examiné. S'il est à une valeur certaine de 1 à 3, alors pour k de 1 à C on copie la valeur T[k] à l'indice I[k] du tableau V[i]. Puis C est mis à 0, et une variable interne j à -1 (pour indiquer qu'une session n'est pas ouverte).
Étape 1 : à la lecture on examine si j>0; si oui, on compare l'indice i demandé avec les valeurs I[k] pour k de j à 1 en décroissant. En cas d'identité, on retourne T[k]. Dans tous les autres cas, on retourne V[i] .
Étape 2 : à l'ouverture de session, on initialise j = 0 (à noter que si une session est ouverte, elle est annulée)
Étape 3 : à chaque écriture, si j =-1 (session non ouverte), on écrit la valeur v communiquée en T[0], l'indice i communiqué en I[0], puis on écrit C=1, puis on écrit v en V[i], puis on écrit C=0; si 0≤j<3 (écriture en session), on augmente j de 1, on écrit v en T[j], on écrit i en I[j]; si j=3 on refuse l'opération (dépassement de la limite des écritures en session).
Étape 4 : à la fermeture de session, si j>0, on écrit j en C, puis pour j de 1 à C on copie la valeur T[j] à l'indice I[j] du tableau V[]. Puis C est mis à 0, etj à -1.

On montre qu'à tout moment on peut couper l'alimentation de la carte et que les valeurs lues seront correctes, c'est-à-dire pour chaque indice i la dernière valeur écrite hors session ou écrite dans une session close (l'écriture est achevée ou la session est close au moment où une valeur non nulle est écrite dans C).

La cryptographie s'ajoute en empêchant certaines opérations si un certificat cryptographique fourni à la carte est incorrect, et/ou en faisant produire à la carte des certificats cryptographiques à l'issue de certaines opérations.

Les certificats cryptographiques utilisés sont basés sur une cryptographie de type connu. Par exemple, le "certificat de session authentifiant la carte" (respectivement, le terminal) est obtenu en appliquant côté carte et terminal l'algorithme *Secure Hash Algorithm* (SHA) aux données fournies par la carte (resp. le terminal) et à un nombre aléatoire fourni par le terminal (resp. la carte) à l'ouverture de la session ; le *Message Authentication Code* (MAC) résultant est signé par la carte (resp. le terminal) par l'algorithme de signature *Digital Signature Algorithm* (DSA) avec une clé secrète contenue dans la carte (resp. le terminal) ; le terminal (resp. la carte) vérifie cette signature avec une clé publique. Un algorithme de cryptographie symétrique tel que *Data Encryption Standard* (DES) peut aussi être utilisée pour la production du MAC et/ou l'élaboration des signatures.

Selon une option de l'invention, l'étape de production du MAC est commune aux deux sens d'authentification, et porte sur l'ensemble des données de la session. Et dans le cas d'une cryptographie symétrique, le certificat authentifiant la carte et celui authentifiant le terminal sont obtenus par une seule étape de chiffrement du MAC, les certificats respectifs de la carte et du terminal s'en déduisant par une opération élémentaire telle qu'extraction de certains bits prédéterminés.

### Exemple II

Dans cet exemple les données de la mémoire sont organisées en secteurs comportant chacun quatre champs :
1. données ;
2. identifiant (clé d'accès permettant de sélectionner un secteur) ;
3. pertinence : permet de déterminer le secteur pertinent si deux secteurs ont le même identifiant ;
4. contrôle : permet de vérifier l'intégrité des trois champs précédents (par exemple un contrôle de type parité).

Un secteur sera désigné par son identifiant, notion qui se substitue à celle d'adresse. La procédure d'écriture d'un secteur a comme paramètre un identifiant et des données à associer à cet identifiant. La procédure de lecture d'un secteur a comme paramètre un identifiant, et retourne les données associées à cet identifiant lors de la dernière écriture effectuée avec ce même identifiant (ou une indication appropriée si cet identifiant n'a jamais été utilisé). En d'autres termes, on réalise un accès de type associatif au lieu d'un accès indexé.

Lors de la procédure de lecture d'un secteur, la carte recherche les secteurs dont l'identifiant a la valeur demandée, et qui (sur la base du champ de contrôle) sont intègres. Au cas où plusieurs secteurs répondent à ces deux critères, elle en retient un sur la base du champ de pertinence.

Lors d'une écriture de secteur, la carte écrit, dans un secteur disponible, les champs données et identifiant demandés, le champ pertinence tel que ce secteur sera, pour la procédure de lecture, le plus pertinent des secteurs intègres possédant cet identifiant, et le champ contrôle en accord avec les trois champs précédents (en d'autres termes, l'écriture est gérée de manière que la lecture ultérieure puisse être correctement opérée).

Avantageusement, la procédure d'écriture se poursuit par l'effacement du secteur rendu non pertinent par l'écriture du nouveau secteur, créant ainsi un nouveau secteur disponible.

On prévoit avantageusement un système (complémentaire) de type *garbage collection,* c'est-à-dire de récupération des secteurs inutiles, qu'ils soient non intègres ou non pertinents.

On prévoit avantageusement un système qui répartit l'usure résultant de l'écriture en évitant d'utiliser toujours les mêmes secteurs, par exemple en choisissant aléatoirement un secteur parmi les secteurs disponibles.

Une variante généralement avantageuse de la procédure de recherche de secteur consiste à profiter de cette étape de recherche pour effacer les secteurs dont il est déterminé qu'ils sont non intègres, et/ou ceux qui ne sont pas les plus pertinents, recréant ainsi des secteurs libres (cela perd du temps lors de cette lecture, en faveur de la vitesse des lectures et écritures ultérieures). Avantageusement, avant l'effacement d'un secteur dont on a déterminé qu'il est intègre mais non pertinent, on écrira à nouveau le secteur pertinent, dont l'écriture peut être imparfaite.

La taille utile de la mémoire est égale au nombre de secteurs disponibles, moins un secteur qui doit rester effacé. Tous les secteurs (y compris celui effacé) sont répartis dynamiquement dans la mémoire.

Si les données doivent être structurées en fichiers, par exemple selon la norme ISO/IEC 7816-4, l'identifiant de secteur se décompose en deux sous-champs, un identifiant de fichier et un identifiant du secteur dans ce fichier.

On va donner ci-dessous une implémentation (non limitative) des opérations de lecture/écriture utilisant cette structuration particulière en secteurs :
- Le champ de contrôle contient, codé en binaire, le nombre de bits à zéro dans les trois autres champs ; on montre que si un problème tel qu'une écriture ou un effacement interrompu modifie un nombre quelconque de bits du secteur tous dans le même sens, le contrôle de la valeur du champ de contrôle permet toujours la détection du problème.
- Le champ pertinence est un entier de 0 à 3, codé sur 2 bits.
- La procédure de lecture parcourt séquentiellement tous les secteurs jusqu'à trouver un premier secteur possédant l'identifiant recherché, et intègre. Si cette recherche ne trouve aucun secteur, on termine la procédure avec un compte-rendu "secteur non trouvé". Si on trouve un tel premier secteur, on mémorise sa position, ses données, et sa pertinence p. La recherche se poursuit. Si l'on détecte un second secteur possédant l'identifiant recherché, et intègre, on teste si sa pertinence q est le reste de la division entière de p+1 par 3 ; si oui, on écrit à nouveau le second secteur, on efface le premier et on retourne les données du second ; sinon, on écrit à nouveau le premier secteur, on efface le second et on retourne les données du premier. Si un second secteur n'est pas trouvé et si la pertinence du premier secteur est p=3, on efface ce secteur et on donne le compte-rendu "secteur non trouvé" ; dans les autres cas, on retourne les données du premier secteur trouvé.
- La procédure d'écriture commence comme la procédure de lecture ci-dessus. Si l'on a trouvé le secteur que retournerait la procédure de lecture pour l'identifiant fourni, on mémorise la position de ce secteur et sa pertinence p (qui vaut 0, 1 ou 2) ; si on ne l'a pas trouvé, on sélectionne un secteur libre (par la procédure ci-après) et on écrit dans ce secteur les champs identifiant, données, pertinence p=3 et contrôle, et l'on mémorise la position et la pertinence de ce secteur. Dans les deux cas, on poursuit en sélectionnant un secteur libre (par la procédure ci-après). On écrit dans ce secteur les champs identifiant, données, pertinence q (calculée comme le reste de la division entière de p+1 par 3) et contrôle. Puis on efface le secteur mémorisé.
- Pour la recherche de secteur libre, on initialise à zéro le nombre n de secteurs libres trouvés. On examine séquentiellement les secteurs. Pour chaque secteur, s'il est non vierge et non intègre, on l'efface et il devient vierge (contribuant ainsi à la *garbage collection* mentionnée plus haut) ; s'il est intègre et si sa pertinence est p=3, on l'efface (idem) ; s'il est intègre et si sa pertinence n'est pas p=3, alors on recherche dans la zone non encore parcourue un autre secteur intègre de même identifiant, et si l'on en trouve un on efface celui qui n'est pas pertinent, en procédant comme pour la lecture ; si à l'issue de ce processus le secteur est vierge, on incrémente le nombre n de secteurs libres trouvés, et l'on effectue le tirage aléatoire d'un entier de 0 à n-1 ; si cet entier est 0, on mémorise la position du secteur vierge. Quand tous les secteurs ont été parcourus, tous les secteurs non vierges sont intègres, il n'existe pas deux secteurs de même identifiant, on connaît le nombre n de secteurs vierges, et l'on a mémorisé l'un d'eux choisi aléatoirement de manière équiprobable. Si aucun secteur libre n'est trouvé, la procédure d'écriture est interrompue.

On va maintenant indiquer la manière dont la carte peut gérer des sessions de modifications indivisibles avec une telle structuration particulière en secteurs.

Pour stocker les modifications indivisibles, la carte dispose dans la mémoire non volatile de N secteurs effacés (N correspondant au nombre de modifications indivisibles que l'on pourra effectuer au cours d'une même session). De plus, elle gère une zone de la mémoire non volatile (hors secteurs) dédiée à la gestion de session et appelée "descripteur de session".

Cet exemple d'implémentation ne comprend aucune authentification propre à la session.

On définit un descripteur de session, composé de 3 champs :
- Liste des références des secteurs indivisibles (LRSA).
- Valeur de contrôle de création de la liste des références des secteurs indivisibles (VCC).
- Valeur de contrôle de prise en compte de la liste des références des secteurs indivisibles (VCPC), qui permettra de savoir si l'on a ou non fermé une session.

Étape 0 : initialisation : avant le premier accès aux données depuis la dernière interruption de fonctionnement de la carte, par exemple au *reset* (remise à zéro), la carte doit faire en sorte que le descripteur de session soit effacé. Il y a plusieurs cas à considérer, selon l'état du descripteur de session :
   - Il est totalement effacé : la carte le laisse en l'état.
   - Il n'est pas totalement effacé, et la VCPC est correcte : la carte recherche et efface (si nécessaire) tous les secteurs rendus obsolètes par ceux écrits (parmi ceux référencés dans la liste), puis efface le descripteur de session.
   - Il n'est pas totalement effacé, la VCPC est effacée ou incorrecte et la VCC est correcte : la carte efface les secteurs indiqués dans la LRSA, puis efface le descripteur de session.
   - Il n'est pas totalement effacé, la VCPC est effacée ou incorrecte et la VCC est effacée ou incorrecte : la carte efface le descripteur de session.
Étape 1 : ouverture de session : la carte recherche N secteurs effacés, puis note la liste de leur référence et sa VCC dans le descripteur de session (supposé effacé).
Étape 2 : en cours de session : la carte reçoit des commandes. Lorsque l'une d'elle provoque une ou plusieurs modifications indivisibles, les secteurs utilisés pour noter ces modifications sont ceux notés dans la LRSA, à concurrence de N secteurs modifiés.
Étape 3 : fermeture de session : pour fermer la session, la carte écrit la VCPC, qui assure que la LRSA et sa VCC ont été pris en compte. Ensuite, elle recherche et efface tous les secteurs rendus obsolètes par ceux écrits (parmi ceux référencés dans la liste). Enfin, elle efface le descripteur de session.

Si, en outre, la carte gère la ratification, la gestion des sessions comporte les modifications ci-après.
Étape 0 : initialisation : dans ce lui des cas où le descripteur de session n'est pas totalement effacé et la VCPC est correcte, la carte recherche et efface (si nécessaire) tous les secteurs rendus obsolètes par ceux écrits (parmi ceux référencés dans la liste), mais elle n'efface pas le descripteur de session.
Étape 1 : ouverture de session : la carte note en mémoire volatile qu'une session est ouverte. Si le descripteur de session n'est pas vierge, la carte signale que la session précédente n'a pas été ratifiée et peut même, en analysant la LRSA, indiquer quelles sont les données non ratifiées. Quoiqu'il arrive, elle ne modifie pas le descripteur de session.
Étape 2 : en cours de session : lors de la première commande avec modifications indivisibles, la carte efface le descripteur de session si nécessaire, recherche N secteurs effacés, puis écrit la LRSA et sa VCC.
Étape 3 : fermeture de session : la carte note en mémoire volatile qu'aucune session n'est ouverte. Quoiqu'il arrive, elle n'efface pas le descripteur de session.

## Revendications

1. Un procédé pour modifier le contenu de la mémoire non volatile d'une carte à microcircuit, notamment d'une carte sans contact,
procédé dans lequel la carte est couplée temporairement à un terminal pendant l'exécution d'une transaction, notamment d'une transaction de télébilletique,
ladite transaction comportant l'application à la carte, par le terminal, d'une pluralité de commandes de modification,
chacune desdites commandes comprenant au moins une opération d'inscription, dans la mémoire de la carte, d'une information particulière, déterminée parmi une pluralité d'informations contenues dans la carte en fonction d'un indice ou d'un identifiant communiqué à la carte par chacune desdites commandes,
les différentes informations ainsi inscrites étant mutuellement interdépendantes, le procédé comprenant l'exécution, par la carte, des étapes suivantes :
a) sur réception de commandes respectives correspondantes reçues du terminal, inscription provisoire, dans la mémoire de la carte, de chacune desdites informations interdépendantes ; puis
b) finalisation de ces modifications de sorte que pour des opérations ultérieures les commandes exécutées à l'étape a) soient :
i) soit toutes prises en compte,
ii) soit toutes sans effet,
procédé dans lequel :
- lesdites commandes sont des commandes de modifications du contenu de la mémoire de la carte,
- à l'étape a), l'inscription dans la mémoire de la carte de nouvelles valeurs desdites informations modifie le contenu de la mémoire sans perte des valeurs antérieures de ces informations, et
- à l'étape b), les modifications sont finalisées de telle sorte que, si toutes les commandes exécutées à l'étape a) sont sans effet, alors les données contenues dans la mémoire non volatile resteront à l'état où elles se trouvaient avant l'exécution de l'étape a).

2. Le procédé de la revendication 1, dans lequel :
- en cas de confirmation à l'étape b), on inscrit dans la mémoire de la carte un témoin confirmatif de bonne exécution, et
- lorsque la carte reçoit ultérieurement une commande impliquant la lecture et/ou la modification de l'une au moins des informations inscrites à l'étape a) ou de la valeur y correspondant, la carte examine préalablement l'état du témoin et, si celui-ci n'a pas été inscrit, la carte ignore ou annule les inscriptions provisoires antérieurement opérées à l'étape a) et exécute la commande sur la base desdites valeurs antérieures correspondant aux informations.

3. Le procédé de la revendication 2, dans lequel, lorsque la carte examine l'état du témoin, si celui-ci a été inscrit la carte exécute des opérations de recopie des écritures provisoires opérées à l'étape a).

4. Le procédé de l'une des revendications 1 et 2, dans lequel la carte est apte à fonctionner selon deux modes, à savoir :
- un mode en session, dans lequel les inscriptions sont opérées par exécution des étapes a) et b), et
- un mode hors session, dans lequel l'opération des inscriptions n'est pas confirmée à l'ensemble des étapes a) et b).

5. Le procédé de l'une des revendications 1 à 4, comprenant une fonction d'authentification combinée à la fonction de finalisation de l'étape b), forçant l'infirmation à l'étape b) dans le cas où l'authentification échoue.

6. Le procédé de la revendication 5, dans lequel ladite authentification est opérée par la carte qui authentifie le terminal et/ou les données échangées entre terminal et carte, la carte contrôlant un certificat cryptographique produit par le terminal et transmis à la carte et ne confirmant les modifications à l'étape b) que si ce certificat est reconnu correct.

7. Le procédé des revendications 4 et 6 prises en combinaison, dans lequel, lorsque la carte reçoit du terminal des commandes de modification du contenu de la mémoire incluant la vérification d'un certificat cryptographique, cette vérification est opérée si la commande est reçue hors session, et ne l'est pas si la commande est reçue en session.

8. Le procédé de la revendication 5, dans lequel ladite authentification est opérée par le terminal qui authentifie la carte et/ou les données échangées entre terminal et carte, la carte produisant et transmettant au terminal un certificat cryptographique de manière conditionnelle, si et seulement si les modifications ont été confirmées à l'étape b).

9. Le procédé des revendications 4 et 8 prises en combinaison, dans lequel, lorsque la carte reçoit du terminal des commandes de modification du contenu de la mémoire incluant la production d'un certificat cryptographique, cette production est opérée si la commande est reçue hors session, et ne l'est pas si la commande est reçue en session.

10. Le procédé de l'une des revendications 1 et 2, dans lequel, lorsque la carte reçoit du terminal à l'étape b) des commandes de modification du contenu de la mémoire incluant la production d'une pluralité de certificats cryptographiques, ces certificats sont mémorisés à cette étape b), puis transmis ensemble au terminal si et seulement si les modifications ont été confirmées à l'étape b).

11. Le procédé des revendications 1 et 4 prises en combinaison, dans lequel au moins certaines des commandes comprennent un attribut d'inhibition, et dans lequel, si la carte exécute une telle commande les modifications opérées par cette commande prennent effet indépendamment du résultat de l'étape b).

12. Le procédé de l'une des revendications 1 et 2, dans lequel il est en outre prévu, après l'étape b) et en cas de confirmation des modifications, la séquence d'étapes suivante :
d) exécution par le terminal d'une action suite à la confirmation par la carte ;
e) en cas de bonne exécution de ladite action par le terminal, inscription dans la carte d'une information de ratification ultérieurement accessible en lecture.

13. Le procédé de la revendication 12, dans lequel la commande d'inscription de l'étape e) est une commande implicite, toute commande reçue par la carte après l'étape b) étant interprétée comme un ordre d'inscription dans la carte d'une information de ratification.

14. Le procédé de la revendication 1 dans lequel, après exécution d'au moins une desdites modifications de l'étape a) non suivie d'une finalisation par une étape b) consécutive, il est prévu en cas de réinitialisation ultérieure de la carte une étape préalable infirmant toutes les modifications ainsi exécutées, de sorte que pour des opérations ultérieures les commandes exécutées à l'étape a) soient toutes sans effet.

## Claims

1. A method of modifying the content of the non-volatile memory of a microcircuit card, in particular a contactless card,
in which method the card is temporarily coupled to a terminal while a transaction is being executed, in particular a remote ticketing transaction,
said transaction including the terminal applying to the card a plurality of modification commands,
each of said modification command comprising at least one operation of recording in the card memory a particular data item, determined among a plurality of data items contained in the card as a function of an index or of an identifier conveyed to the card by each of said commands,
the various data items recorded in this way being mutually interdependent,
the method comprising the card executing the following steps:
a) on receiving corresponding respective commands from the terminal, provisionally recording in the card memory each of said interdependent items of information; then
b) finalizing such modifications such that for subsequent operations the commands executed in step a) will:
i) either all have been taken into account,
ii) or else all of them will be without effect,
in which method:
- said commands are commands for modification of the contents of the card memory,
- in step a), the writing in the card memory of new values of said data items modifies the contents of the memory without losing prior values of said items, and
- in step b), the modifications are finalized in such a way that, if all the commands performed in step a) are without effect, then the data contained in the non-volatile memory will remain in the state they were before step b) being performed.

2. The method of claim 1, in which:
in the event of confirmation in step b), a flag confirming proper execution is recorded in the memory of the card; and
when the card subsequently receives a command requiring at least one of the data items written in step a) or the value corresponding thereto to be read and/or modified, the card begins by examining the state of the flag, and if it has not been recorded, the card ignores or cancels the provisional recordings previously made in step a) and executes the command on the basis of said prior values corresponding to the data items.

3. The method of claim 2, in which, when the card examines the state of the flag, and if the flag has been recorded, the card executes operations for copying the provisional writes made in step a).

4. The method of claim 1 or 2, in which the card is suitable for operating in two modes, namely:
an in-session mode in which recordings are made by executing steps a) and b); and
an out-of-session mode in which the making of recordings is not confirmed to all of steps a) and b).

5. The method of any one of claims 1 to 4, comprising an authentication function combined with the function of finalizing step b), forcing step b) to be discarded in the event of authentication failing.

6. The method of claim 5, in which said authentication is performed by the card which authenticates the terminal and/or the data interchanged between the terminal and the card, the card checking a cryptographic certificate produced by the terminal and transmitted to the card, and confirming the modifications in step b) only if the certificate is recognized as being correct.

7. The method of claims 4 and 6 taken in combination, in which, when the card receives from the terminal commands for modifying the content of the memory and including verification of a cryptographic certificate, said verification is performed if the command is received out-of-session, and it is not performed if the command is received in-session.

8. The method of claim 5, in which said authentication is performed by the terminal which authenticates the card and/or the data interchanged between the terminal and the card, the card producing and transmitting a cryptographic certificate in conditional manner to the terminal, if and only if the modifications have been confirmed in step b).

9. The method of claims 4 and 8 taken in combination, in which, when the card receives from the terminal commands for modifying the contents of the memory and including the production of a cryptographic certificate, said production is performed if the command is received out-of-session, and is not performed if the command is received in-session.

10. The method of claim 1 or 2, in which, when the card receives from the terminal in step b) commands for modifying the contents of the memory and including the production of a plurality of cryptographic certificates, these certificates are stored in step b), and then transmitted together to the terminal if, and only if the modifications have been confirmed in step b).

11. The method of claims 1 and 4 taken in combination, in which at least some of the commands include an inhibit attribute, and in which, if the card executes such a command, the modifications performed by said command take effect independently of the result of step b).

12. The method of claim 1 or 2, in which provision is further made, after step b) and in the event of modifications being confirmed, for the following sequence of steps to be performed:
d) the terminal executes an action following confirmation by the card; and
e) in the event of said action being properly performed by the terminal, ratification information is recorded in the card suitable for subsequent accessing by reading.

13. The method of claim 12, in which the recording command of step e) is an implicit command, any command received by the card after step b) being interpreted as an order for recording ratification information in the card.

14. The method of claim 1, in which after performing at least one of said modifications in step a) which is not followed by a finalization by a step b) occurring thereafter, in case of later re-initialization of the card provision is made of a preliminary step infirming all modifications thus performed, such that for any following operations all commands performed in step a) be without effect.

## Patentansprüche

1. Verfahren zur Veränderung des Inhalts des nichtflüchtigen Speichers einer Karte mit Mikroschaltung, insbesondere einer kontaktlosen Karte,
Verfahren, bei welchem die Karte zeitweise während der Durchführung einer Transaktion, insbesondere einer Ferntransaktion für Fahrkarten, mit einem Terminal gekoppelt ist,
wobei die Transaktion das Anwenden einer Mehrzahl von Veränderungsbefehlen durch das Terminal auf die Karte umfasst,
wobei jeder der Befehle wenigstens einen Vorgang des Schreibens einer besonderen Information in den Kartenspeicher umfasst, die unter einer Mehrzahl von Informationen bestimmt wird, die in der Karte in Abhängigkeit eines Indexes oder eines Identifizierungsmittels enthalten sind, der/das der Karte mittels jedem der Befehle mitgeteilt wird,
wobei die verschiedenen derart geschriebenen Informationen gegenseitig voneinander abhängen, wobei das Verfahren die Durchführung der folgenden Schritte durch die Karte umfasst:
a) bei Empfang jeweiliger entsprechender vom Terminal empfangener Befehle, vorläufiges Schreiben jeder der gegenseitig abhängigen Informationen in den Kartenspeicher; sodann
b) Fertigstellung dieser Veränderungen, so dass die beim Schritt a) ausgeführten Befehle für spätere Vorgänge:
i) entweder alle berücksichtigt werden,
ii) oder alle ohne Wirkung sind,
Verfahren, bei welchem:
- die Befehle Befehle zur Veränderung des Inhalts des Kartenspeichers sind,
- beim Schritt a) das Schreiben neuer Werte der Informationen in den Kartenspeicher den Inhalt des Speichers ohne Verlust der vorherigen Werte dieser Informationen verändert, und
- beim Schritt b) die Veränderungen derart fertig gestellt werden, dass, falls alle beim Schritt a) ausgeführten Befehle ohne Wirkung sind, dann die im nicht flüchtigen Speicher enthaltenen Daten im Zustand verbleiben werden, in welchem sie sich vor Durchführung des Schrittes a) befanden.

2. Verfahren nach Anspruch 1, bei welchem:
- man im Falle einer Bestätigung beim Schritt b) in den Kartenspeicher einen Beleg schreibt, der die ordentliche Durchführung bestätigt, und,
- wenn die Karte später einen Befehl empfängt, der das Lesen und/oder die Veränderung wenigstens einer der beim Schritt a) geschriebenen Informationen oder des entsprechenden Werts impliziert, die Karte vorab den Zustand des Belegs betrachtet, und, falls dieser nicht geschrieben wurde, die Karte die vorher beim Schritt a) durchgeführten vorläufigen Schreibvorgänge ignoriert oder annulliert und den Befehl auf der Grundlage der vorherigen den Informationen entsprechenden Werte durchführt.

3. Verfahren nach Anspruch 2, bei welchem, wenn die Karte den Zustand des Belegs betrachtet, falls dieser geschrieben wurde, die Karte Kopiervorgänge der vorläufigen beim Schritt a) vorgenommenen Schreibvorgänge durchführt.

4. Verfahren nach einem der Ansprüche 1 und 2, bei welchem die Karte in der Lage ist, gemäß zweier Modi zu funktionieren, nämlich:
- einem Sitzungsmodus, bei welchem die Schreibvorgänge durch Durchführung der Schritte a) und b) vorgenommen werden, und
- einem sitzungsfreien Modus, bei welchem die Vornahme der Schreibvorgänge während der Gesamtheit der Schritte a) und b) nicht bestätigt wird.

5. Verfahren nach einem der Ansprüche 1 bis 4, mit einer Authentifizierungsfunktion, die mit der Fertigstellungsfunktion des Schrittes b) kombiniert ist, welche beim Schritt b) die Verwerfung erzwingt, falls die Authentifizierung fehlschlägt.

6. Verfahren nach Anspruch 5, bei welchem die Authentifizierung durch die Karte erfolgt, die das Terminal und/oder die zwischen dem Terminal und der Karte ausgetauschten Daten authentifiziert, wobei die Karte ein durch das Terminal erzeugtes und an die Karte übertragenes kryptographisches Zertifikat prüft und die Veränderungen beim Schritt b) nur bestätigt, falls dieses Zertifikat für korrekt befunden wird.

7. Verfahren nach den Ansprüchen 4 und 6 in Kombination, bei welchem, wenn die Karte vom Terminal Befehle zur Veränderung des Speicherinhalts, umfassend die Überprüfung eines kryptographischen Zertifikats, empfängt, diese Überprüfung durchgeführt wird, falls der Befehl außerhalb einer Sitzung empfangen wird, und nicht durchgeführt wird, falls der Befehl während einer Sitzung empfangen wird.

8. Verfahren nach Anspruch 5, bei welchem die Authentifizierung durch das Terminal erfolgt, das die Karte und/oder die zwischen dem Terminal und der Karte ausgetauschten Daten authentifiziert, wobei die Karte unter Bedingungen ein kryptographisches Zertifikat erzeugt und an das Terminal übermittelt, wenn und nur wenn die Veränderungen beim Schritt b) bestätigt wurden.

9. Verfahren nach den Ansprüchen 4 und 8 in Kombination, bei welchem, wenn die Karte vom Terminal Befehle zur Veränderung des Speicherinhalts, umfassend die Erzeugung eines kryptographischen Zertifikats, empfängt, diese Erzeugung erfolgt, falls der Befehl außerhalb einer Sitzung empfangen wird, und nicht erfolgt, falls der Befehl während einer Sitzung empfangen wird.

10. Verfahren nach einem der Ansprüche 1 und 2, bei welchem, wenn die Karte beim Schritt b) vom Terminal Befehle zur Veränderung des Speicherinhalts, umfassend die Erzeugung einer Mehrzahl von kryptographischen Zertifikaten, empfängt, diese Zertifikate bei diesem Schritt b) gespeichert werden, und dann gemeinsam an das Terminal übertragen werden, wenn und nur wenn die Veränderungen beim Schritt b) bestätigt wurden.

11. Verfahren nach den Ansprüchen 1 und 4 in Kombination, bei welchem wenigstens bestimmte der Befehle ein Unterdrückungsattribut umfassen, und bei welchem, falls die Karte einen solchen Befehl ausführt, die durch diesen Befehl vorgenommenen Veränderungen unabhängig vom Ergebnis des Schritts b) wirken.

12. Verfahren nach einem der Ansprüche 1 und 2, bei welchem weiterhin nach dem Schritt b) und im Falle der Bestätigung der Veränderungen die folgende Schrittsequenz vorgesehen ist:
d) Durchführung eines Vorgangs durch das Terminal im Anschluss an die Bestätigung durch die Karte;
e) im Falle einer ordnungsgemäßen Durchführung des Vorgangs durch das Terminal, Schreiben einer Abschlussinformation in die Karte, die später über einen Lesevorgang zugänglich ist.

13. Verfahren nach Anspruch 12, bei welchem der Schreibbefehl des Schritts e) ein impliziter Befehl ist, wobei jeder durch die Karte nach dem Schritt b) empfangener Befehl als Befehl des Schreibens einer Abschlussinformation in die Karte interpretiert wird.

14. Verfahren nach Anspruch 1, bei welchem nach Durchführung wenigstens einer der Veränderungen des Schritts a), die nicht von einer Fertigstellung durch einen sich anschließenden Schritt b) gefolgt wird, im Fall einer späteren Reinitialisierung der Karte ein vorhergehender Schritt vorgesehen ist, der alle derart durchgeführten Veränderungen verwirft, so dass die beim Schritt a) durchgeführten Befehle für nachfolgende Vorgänge allesamt ohne Wirkung sind.
